# EUROPEAN PATENT APPLICATION

(11) **EP 0 792 924 A1**
(43) Date of publication of application: **03.09.1997**
(21) Application number: 97301355.0
(22) Date of filing: 28.02.1997
(51) Int. Cl.: C09D 5/32, G21F 1/10

(54) **Radiation attenuating composition**

(30) Priority: 29.02.1996 GB 9604335
(71) Applicant: Wass, Malcolm Laing, Brancepeth, Durham DH7 8DU (GB)
(72) Inventor: Wass, Malcolm Laing, Brancepeth, Durham DH7 8DU (GB)
(74) Representative: Hughes, Brian Patrick

(57) **Abstract**

A radiation attenuation composition comprises a radiation attenuating material 10 dispersed within a plastics material 20 and having a particle size in the range 0.5-200 microns. The composition may be in the form of a solid but is preferably a paint formulation.

## Description

This invention relates to personnel and environmental protection from radiation by radiation attenuating compositions or materials, and in particular to flexible or liquid radiation attenuating compositions.

The use of lead in sheet form or as shot or granules has long been used as a radiation attenuation material by individuals working with or in close proximity to sources of nuclear radiation.

However, lead is neither popular nor particularly well suited to the task for a variety of reasons. For example, lead sheet is extremely dense and relatively large thicknesses of the naterial in sheet form are required to provide adequate protection to, for example, radiographers working in hospitals or on construction sites.

Furthermore, lead sheet has a number of disadvantages when used in this way. Although malleable it work hardens rapidly and tends to crack, it cannot bend readily and is difficult to manipulate into complex shapes. Lead sheet, shot and more particularly granules are also poisonous so that extreme care is required to ensure that prolonged contact does not give rise to medical conditions such as poisoning and dermatitis. Because of its toxicity the use of lead is strictly controlled by legislation in the UK and Europe.

To overcome these problems of using lead sheet, granulated lead or lead shot encased in an inherently flexible material such as a suitable plastics material has been employed. Unfortunately, many of these composite materials once they have incorporated sufficient lead shot/granules to achieve an acceptable level of attenuation are not strong enough to support their own weight and tend to tear or split when flexed or stressed. Solutions to this problem have generally involved using plastics materials that incorporate lower amounts of lead shot/granules and using several layers of them. Although these solutions have some advantages over lead sheet these materials are still inherently bulky and the lead particles are still inherently toxic.

These types of materials also suffer from the disadvantage that they still tend to split when flexed by virtue of the fact that relatively large particles of lead have to be used in the construction of these composite materials. Reducing the particle size to the level required to maintain the integrity of the plastics material when flexed causes its own problems because some of the conventional radiation attenuating materials in micron form are pyrophoric. Therefore, conventional solutions to this problem of tearing and/or splitting of the plastics materials have typically involved encasing the composite within a laminate structure. Typically the plastics material that forms the plastics component of the composite is a silicone elastomer and this silicone elastomer is sandwiched and bonded between two thinner sheets of silicone elastomer. This has tended to obviate the problem of splitting/tearing associated with flexible radiation attenuating materials.

Nevertheless, the process used to form such a laminate is expensive, time consuming and unnecessary.

Tungsten metal and alloys provide greater radiation attenuation than lead due in the main to their greater density. Tungsten metal and tungsten alloys largely avoid the disadvantages of the poisoning effects of lead because they are not toxic. However, tungsten metal and tungsten alloys do have the problem that they are extremely hard and brittle and cannot be shaped other than by sintering into shapes or by cutting to shape using spark erosion or laser cutting techniques.

It is an object of the present invention to obviate or mitigate these problems.

The present invention provides a radiation attenuation composition comprising a radiation attenuating material dispersed within a plastics material and characterised in that the radiation attenuating material has a particle size in the range 0.5-200 microns.

Preferably the plastics material is of non-laminate construction.

Preferably the radiation attenuating material comprises particles within the range 7-14 microns.

The composition may be a liquid for use as a paint.

Preferably the formulation is so adapted to allow the paint to be brush or spray applied in substantially thick single coats.

More preferably still, the radiation attenuating material is particulate tungsten, rhenium or osmium, or alloys of those metals.

In a particularly preferred embodiment the plastics material is a silicone elastomer.

The plastics material may be hand malleable.
More preferably still the malleable plastics material is one of the general types of plastics material known commercially in the UK as PLASTICINE.

Embodiments of the present invention will now be described, by way of example, with reference to the accompanying drawing, in which:-
- Fig. 1 illustrates a cross section through a plastics: material that has a radiation attenuating material dispersed in it; and
- Fig. 2 illustrates a sheet of the plastics material as: illustrated in Fig. 1 draped over some equipment to illustrate its flexibility.

### Description of the Preferred Embodiments.

Throughout this specification the term "sheet" as used herein is intended to cover elongate strips, elements such as tiles as well as sheet products, blocks or briquettes, or castings to suit a profile, for example, or tubular.

The term "paint" is intended to cover both single and multipack, for example, two-pack systems where the first pack contains the plastics material or polymer and the second pack contains the so called "curing agent".

The term "plastics material" or "polymer" is intended to encompass all such plastics materials or polymers whose glass transition temperature is below minus 10 degrees Celsius, in particular appropriate polysiloxsanes, polysulphides and polyurethanes.

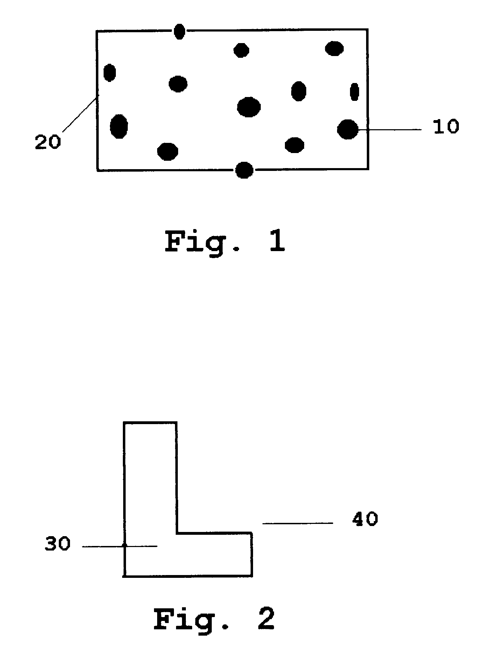

The embodiments illustrated in Figs. 1 and 2 represent currently the best ways known to the applicant of putting the invention into practice in sheet form.

Fig. 1 illustrates a cross section of a plastics material 20 that has a radiation attenuating material 10 dispersed within it. The radiation attenuating material is particulate or granular and its density throughout the cross sectional area of the plastics material is substantially uniform. For the avoidance of doubt, and as illustrated in Fig. 1, in this particular embodiment the term "throughout" does mean throughout, that is, there will be a substantially uniform concentration of the attenuating material up to and including the surface of the plastics material.

The particulate or granular radiation attenuating material in this embodiment is commercially available tungsten or tungsten alloy and the particulate/granular material is substantially spherical in nature. Rhenium or rhenium alloys may be substituted for the tungsten or tungsten alloy. The particle size of the tungsten or tungsten alloy, rhenium or rhenium alloy is in the range 7-14 microns; however, for other embodiments not illustrated, the particle sizes for any given radiation attenuating element will be within the range of 0.5-200 microns. The plastics material in this particular embodiment is a cured (that is, cross-linked) silicone elastomer, the finished radiation attenuating composite coming in the form of sheets or profiles.

Such sheets 40 of radiation attenuating composite are inherently flexible by virtue of the extremely low Tg of the silicone elastomer, enabling the sheets to be folded over equipment 30 substantially attenuating any radiation that is being emitted from the equipment (see Fig. 2). Figs. 1 and 2 both illustrate sheet radiation shielding elements that are of non-laminate construction.

### Manufacturing Example.

A glass mould was prepared by polishing with a release agent,for example, Naturhaus Biowax. A mixture of 1 litre of Dow Corning Silastic 3481 was made up by weighing a quantity of the base resin and curing agent according to the manufacturers instructions. To this mixture was added 1.5 litres (approximately 10 kilograms) of tungsten alloy particles in powder form. The whole was mixed thoroughly and the resulting mixture was vacuum degassed. The material was poured into the prepared mould and allowed to cure for approximately twenty four hours. The resulting composite was removed from the mould.

In alternative embodiments that are not illustrated, the shape of the radiation attenuating material need not be substantially spherical and alternative forms of particulate or granular radiation attenuating materials can be used, for example substantially amorphous, discotic or elongate particles. Furthermore, again in alternative embodiments not illustrated, the plastics material incorporating any or all of the above arrangements of particle shapes could vary from a silicone elastomer through to any appropriate polymer or plastics material, for example, polyurethanse or polysulphides.

In yet further embodiments not illustrated, materials other than tungsten or tungsten alloys, rhenium or rhenium alloy could be used, for examples, osmium. The choice of particle shape, plastics material employed and moreover the type of radiation attenuating material employed can be selected without further inventive thought by the skilled addressee of this specification.

Furthermore, in yet further alternative embodiments not illustrated, it is envisaged that radiation attenuating elements of the type described herein can be colour coded to indicate various densities of radiation attenuating material(s) that are held in the plastics material.

However, tungsten and tungsten alloys as materials have significant advantages over the conventional use of lead in such radiation attenuating elements. Lead is toxic and is only commercially available in relatively large particle sizes. Tungsten and tungsten alloys on the other hand are commercially available in far smaller particles than lead, are non-toxic and indeed are non-pyrophoric and offer superior radiation attenuating properties once incorporated into plastics materials of the type described herein but with the added advantage that the thickness of the sheets employed are almost half those that employ lead, or that the sheets are more effective for a similar thickness.

Furthermore, the smaller particle sizes that are available for tungsten or tungsten alloys mean that the possibility of tearing or splitting of the plastics material incorporating the tungsten or tungsten alloy particles are much reduced.

Another advantage of the smaller particle size available for tungsten and tungsten alloys is that the particles can pack more tightly together when incorporated into the plastics material and therefore offer a greater degree of radiation attenuation thereby lowering the thickness of the sheet needed to carry out the attenuating task.

In yet further alternative embodiments not illustrated, pigments can be incorporated into the plastics material which provide additional properties as described by GPA Turner in his book "Introduction to Paint Chemistry and Principles of Paint Technology" (3rd Edition).

In a second and important aspect of the present invention, the temporary nature of the radiation attenuating element need not necessarily come in the form of a sheet. Silicone elastomers by their very nature are inherently non-stick when cured. Such elastomers when used as paint formulations and applied to a surface irrespective of the nature of the surface, that is it could be rough or smooth, can be peeled off the surface that they have been applied to. Therefore a paint formulation comprising any form of substantially non-stick plastics material that incorporates a radiation attenuating material according to any of the variations described herein above are envisaged as alternative, and in some cases preferred, forms of temporary radiation attenuating elements. In particular, paint formulations of the type just described that can be spray applied in substantially thick single coats are also intended to be covered by this specification.

Another alternative embodiment not illustrated that covers a third aspect of this invention involves the use of hand malleable plastics that incorporate particulate radiation attenuating particles, in particular, but not exclusively tungsten or tungsten alloy particles.

Typical hand malleable plastics materials that can be used come under the commercial trade name "PLASTICINE" in the UK. Such a material, like the silicone paint formulation just described, is inherently non-stick and as a result can be removed and disposed of quickly and efficiently and as such can also act as a temporary radiation attenuating element.

The main advantage of using a PLASTICINE or PLASTICINE type hand malleable polymer either alone or in conjunction with any of the other forms of radiation attenuating elements just described, is that the thickness of the PLASTICINE can easily be increased in a particular area thereby increasing the attenuating effect of the radiation attenuating element very rapidly should the need arise. Obviously, tungsten or tungsten alloys need not necessarily be used in conjunction with, for example, PLASTICINE; once again, any of the arrangements described herein that are applicable, can be used to provide alternative embodiments of this form of radiation attenuating element.

A radiation attenuating composition or material as described herein combines the attenuating effects of tungsten, rhenium or osmium within a pliable material that can be readily moulded into shape much more easily than lead sheeting.

It can also be painted onto surfaces and does not suffer from the mechanical disadvantages of lead sheet.

It is also possible to wrap and mould the material around complex shapes; the material can also be cut to shape with a sharp blade, allowing for some measure of fabrication to suit the majority of configurations encountered.

The attenuation requirements of the material can be varied to resolve various application problems by the adjustment of the metal or metal alloy to plastic ratio. If necessary, several layers of the material can be applied either by painting or by wrapping cured sections in a sequence to increase the attenuation required to bring the unwanted radiation down to the legal limit.

## Claims

1. A radiation attenuation composition comprising a radiation attenuating material dispersed within a plastics material and characterised in that the radiation attenuating material has a particle size in the range 0.5-200 microns.

2. A composition as claimed in claim 1, characterised in that the the radiation attenuating material has a particle size in the range 7-14 microns.

3. A composition as claimed in claim 1 or claim 2, characterised in that the plastics material is of non-laminate construction.

4. A composition as claimed in any preceding claim, characterised in that the radiation attenuating material is particulate tungsten, rhenium, or osmium, or particulate alloys of those metals.

5. A composition as claimed in any preceding claim, characterised in that the composition is liquid for use as a paint.

6. A composition as claimed in claim 5, characterised in that the formulation of the paint composition is so adapted as to allow the paint to be brush or spray applied in substantially thick single coats.

7. A composition as claimed in any preceding claim, characterised in that the plastics material has a glass transition temperature below minus 10 degrees Celsius.

8. A composition as claimed in any preceding claim, characterised in that the plastics material is a silicone elastomer.

9. A composition as claimed in any of claims 1 to 4, characterised in that the plastics material is hand malleable.
